(19) Europäisches Patentamt / European Patent Office / Office européen des brevets

(11) **EP 4 116 618 A1**

(12) **EUROPEAN PATENT APPLICATION**
published in accordance with Art. 153(4) EPC

(43) Date of publication:
**11.01.2023 Bulletin 2023/02**

(21) Application number: **21756653.8**

(22) Date of filing: **17.02.2021**

(51) International Patent Classification (IPC):
**F16M 11/12** (2006.01)    **F16M 11/18** (2006.01)
**F16M 13/04** (2006.01)

(86) International application number:
**PCT/RU2021/050039**

(87) International publication number:
**WO 2021/167499 (26.08.2021 Gazette 2021/34)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **17.02.2020 RU 2020107183**

(71) Applicant: **Radzevich, Anton Yanovich
Moscow, 129110 (RU)**

(72) Inventor: **Radzevich, Anton Yanovich
Moscow, 129110 (RU)**

(74) Representative: **Osmans, Voldemars et al
Agency Tria Robit
P.O. Box 22
LV-1010 Riga (LV)**

(54) **DEVICE FOR STABILIZING VIDEO EQUIPMENT**

(57)    The invention relates to handheld devices for stabilizing film and video recording equipment (film cameras, video cameras and other recording devices), which compensate for shaking and vibrations from the hands or shoulder of the operator when filming in motion and allow the smooth movement of video equipment. A device for stabilizing video equipment comprises a base and a movable platform connected to one another by at least one hinge mechanism that is configured on the basis of the relationship expressed in formula **(I).** where x is the distance from the upper horizontal surface of the platform to the point of inspection of the axes of a hinge mechanism; $K \leq 0{,}5$; $V_i = a_i \times b_i \times c_i$; $a_i$ is the length of a three-dimensional parallelepiped; $b_i$ is the height of a three-dimensional parallelepiped; $c_i$ is the width of a three-dimensional parallelepiped; n is the total number of hinge mechanisms. The technical result lies in reducing the dimensions and weight of the stabilizing device.

Fig. 1

EP 4 116 618 A1

**Description**

TECHNICAL FIELD

The invention relates to hand-held devices for stabilizing filming and video equipment (film cameras, camcorders, and other filming devices) that compensate for shaking and vibration when filming in motion from the hands or shoulder of the operator, ensuring smooth motion of the video equipment.

BACKGROUND ART

At the heart of all camera stabilization techniques used in the motion picture industry is a device that allows the camera, or the camera together with a counterweight, to rotate around the center of gravity of that device. Such devices solve two problems simultaneously: compensation of undesirable angular rotations, i.e. providing stabilization as well as horizontal and vertical panning of the camera.

Prior art includes Gymbal-type devices that are known for stabilizing video cameras and picture cameras with video function that the cameraman can carry in his hands. Such cameras are balanced in the center of the system where they can rotate freely in three axes. The degrees of freedom are used for both stabilization and panning at the same time.

For example, according to US 2018335178 A1, publ. 22.11.2018, a stabilization device is known as one including a payload stabilization assembly, the handles configured so that the user can fully support the stabilization device. The payload stabilization assembly is designed to support the payload and enable, by means of connection joints, free rotation of the stabilized object in three axes made orthogonal to each other.

The disadvantages of this device include the inability to work with large cameras, uncomfortable ergonomics and control (the cameraman holds the system on outstretched arms), large dimensions and weight of the device.

In addition, according WO 2019134151 A1, publ. 11.07.2019, a manual stabilization device is known as one comprising a gimbal, a platform on which a stabilized object is mounted, a handle coupled to the gimbal, wherein the gimbal is made to rotate around three axes by means of hinge joints.

The disadvantage of such a solution is that this kind of mechanics does not scale in a way that it is possible to build a similar system for a larger camera size. This is due to the fact that despite the small absolute size of the system, it is not small enough relative to the camera size.

SUMMARY OF INVENTION

The technical objective of the present invention is to create a device capable of stabilizing video and film equipment while it is being moved, while having a small size and weight.

The technical result is to reduce the size and weight of the stabilization device.

The technical result is achieved due to the fact that the device for stabilization of video equipment comprises a base and a movable platform, connected to each other by at least one hinge mechanism made on the basis of the following ratio:

$$\frac{\sum_{i=n}^{i=1} V_i}{8x^3} = K$$

where x is the distance from the upper horizontal plane of the platform to the intersection point of the axes of the hinge mechanism;

    K - resulting coefficient (K≤0,5);
    Vi - volume of each of the parallelepipeds, in which the hinge joint is enclosed (Vi = ai x bi x ci);
    ai - length of the dimensional parallelepiped;
    bi - height of the dimensional parallelepiped;
    ci - width of the dimensional parallelepiped;
    n - total number of hinge mechanisms.

The hinge mechanism has at least two links connected both to each other and to the base and platform by at least three cylindrical hinges, each of which is designed to rotate about its axis.

The first link is connected at its first end to the base of the device, and its second end is connected to the first end of the second link, and the second end of the second link is connected to the platform of the device.

The axes of the hinge mechanisms are not orthogonal to each other.

The device contains more than one hinge mechanism, and the axes of all hinge mechanisms intersect at one point.

The device may additionally contain at least one brushless motor which is mounted directly on the axis or is designed to control the hinges via at least one lever, belt or chain gear.

The device may additionally contain adjustable handles and changeable shoulder rests attached to the base of the device.

The device may additionally contain a monitor and/or viewfinder that is attached to the base and/or movable platform or carried on the camera or cameraman's body.

The device may additionally contain an internal or external battery pack designed to power the device and the stabilized camera.

BRIEF DESCRIPTION OF DRAWINGS

Fig. 1 - General view of the stabilizer;
Fig. 2 - Stabilizer, bottom view;
Fig. 3 - Hinge mechanism;
Fig. 4 - Stabilizer; side view;
Fig. 5 - Stabilizer, bottom view;
Fig. 6 - Stabilizer with a mounted motion picture camera.

EMBODIMENT OF INVENTION

The task of the claimed solution is to create a device which, in comparison with the solutions known from the prior art, has small dimensions and weight due to the fact that it has only the stabilization function, because when shooting with a handheld camera, the cameraman performs panning by rotating the body and bending his hands.

It should be understood that in all known above stabilization systems there is the following ratio of its elements:

$$\frac{\sum\limits_{i=n}^{i=1} V_i}{8x^3} = K$$

where x is the distance from the upper horizontal plane of the platform to the intersection point of the axes of the hinge mechanism (accordingly 8x3 - the volume of the cube, with the center coinciding with the intersection point of the axes of hinge mechanisms, and touching its edge with the movable platform);

K - resulting coefficient;
Vi = ai x bi x ci;
ai - length of the dimensional parallelepiped (three-dimensional quadrilateral);
bi - height of the dimensional parallelepiped;
ci - width of the dimensional parallelepiped;
n - total number of hinge mechanisms.

It should be understood that such an equality can be made for all of the above systems, and their analogues, but in the existing systems the coefficient K is much greater than 0.5.

In the actually existing solutions, the coefficient K is greater than 1, consequently, the dimensions of the known systems are quite large, and with the implementation of the kinematics used in the existing systems, reducing the coefficient is extremely difficult.

The purpose of the claimed invention is to reduce the size of the stabilizer by obtaining a smaller value of the coefficient K.

To reduce the size of the stabilizer, it was decided to change its mechanics, namely: to change the location of hinge mechanisms, to reduce the angles between the axes of each link of the hinge mechanism, so that eventually they fit into a much smaller dimensional parallelepiped, resulting in a decrease of the coefficient K in the formula depicted above.

The mechanics of the claimed device is required to provide freedom of rotation of the camera only within a few degrees sufficient for stabilization. The ability to rotate the camera 360 degrees is needed only for panning, not for stabilization, but because of this, a system that can rotate 360 degrees is much larger in dimensions and weight than a system that can rotate only a few degrees.

Such a device will have different performance characteristics compared to existing systems, namely a smaller rotation range of the stabilized platform relative to the base.

It should be understood that the larger the coefficient K is, the more dimensional the system becomes, and at the same time the greater the range of stabilized deviations is. And as the coefficient K decreases, the system becomes more compact, but at the same time the range of the operation of hinge mechanism decreases as well.

Experience has shown that by decreasing the range of the operation of hinge mechanisms, with a coefficient K equal to or less than 0.5, it was possible to achieve a significant reduction in the dimensions of the device, and with a coefficient K from 0.5 to 1.0, the same significant reduction in dimensions could not be achieved.

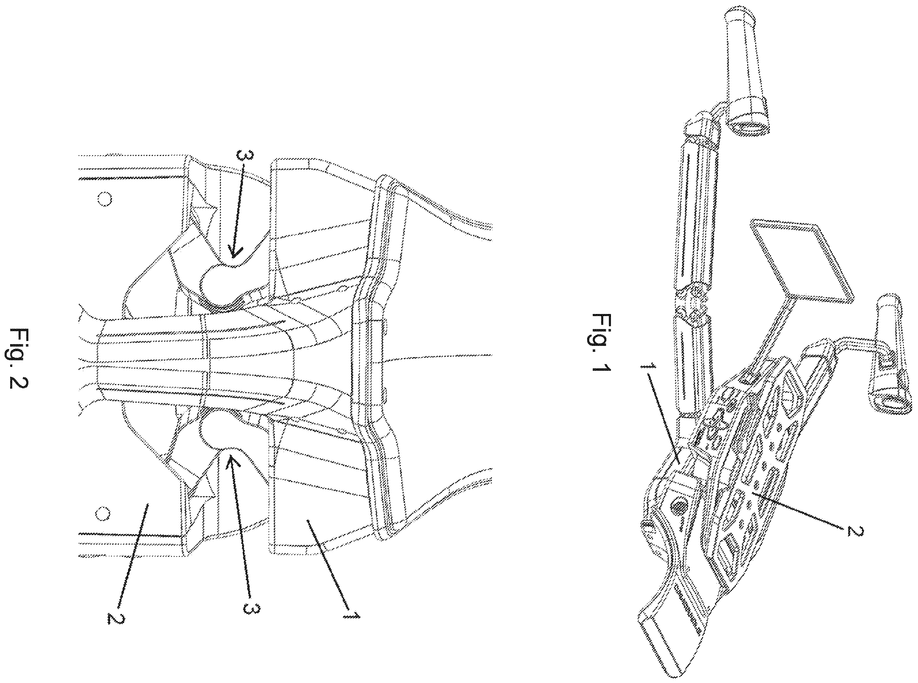

Video equipment stabilizer contains (see Fig. 1, 2) a base 1 and a movable platform 2 connected to each other by at least one hinge mechanism 3, made according to the following ratio:

$$\frac{\sum\limits_{i=n}^{i=1} V_i}{8x^3} = K$$

where x is the distance from the upper horizontal plane of the platform to the intersection point of the axes of the hinge mechanism (accordingly $8x^3$ - the volume of the cube, with the center coinciding with the intersection point of the axes of hinge mechanisms, and touching its edge with the movable platform);

K - resulting coefficient (K≤0,5);
Vi - volume of each of the parallelepipeds, in which the hinge mechanism is enclosed (Vi = ai x bi x ci);

ai - length of the dimensional parallelepiped (three-dimensional quadrilateral);

bi - height of the dimensional parallelepiped;

ci - width of the dimensional parallelepiped;

n - total number of hinge mechanisms.

The base of the device can be made of any shape, with the possibility of holding it in the hands by the cameraman both at a distance from the body (on the stretched arms), and near the body or on the shoulder of the cameraman.

Platform 2, located on top of the base 1, designed to install video equipment on it, connected to the base with a hinge mechanism 3.

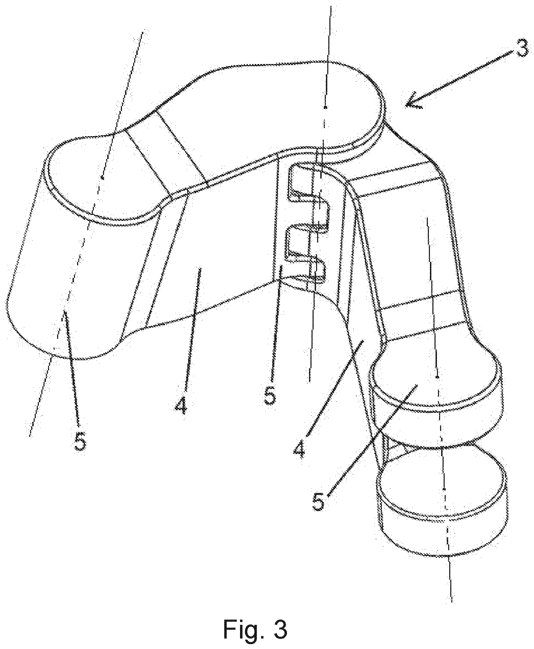

The hinge mechanism 3 is (see Fig. 3) at least two links 4 connected both to each other and to the base 1 and the platform 2 by means of at least three cylindrical hinges 5, each of which is designed to rotate about its axis. The first link is pivotally connected at its one end to the base 1 of the device, and at the other end to the other link, with the second end of the second link pivotally connected to the platform 2 of the device.

The hinge mechanism, having at least two links pivotally connected both to each other and to the base and platform, contains at least three cylindrical hinge joints whose axis lines are not orthogonal to each other. These axes intersect at one point located at distance X from the platform. The location of the hinge axes in space is chosen so as to ensure the mobility of the stabilized platform in three rotational degrees of freedom. It should be understood that if more than one hinge is used in the system, all axes of all hinges must intersect at the same point.

To make the system more compact, at least three axes creating rotational degrees of freedom of the camera are not orthogonal to each other, but having a smaller angle, such as 10-20 degrees, which is sufficient to rotate the camera, but the device is at least half the size of devices providing full rotation, and therefore several times lighter.

As with competing systems, the mechanics can be powered by brushless motors (or other types of motor).

Since the axes of rotation do not coincide with the traditional orthogonal X, Y and Z axes, a special algorithm which calculates the rotation coefficients of the motors to achieve correct stabilization must be included into the device.

At least one motor may be mounted either directly on the axle or on any other suitable location on the device with the ability to operate the hinges via at least one lever, belt or chain gear or other mechanical connection.

The stabilizer may contain adjustable handles, changeable shoulder rests attached to the base of the device, and other auxiliary elements to enhance the device control by cameraman.

In addition, the device may contain a monitor and/or viewfinder as well as other accessories for filmmaking that can be attached either to the base or to a movable platform or can be carried on the camera or cameraman's body.

The device can be powered from either the internal or external battery pack on the cameraman's body. The stabilized camera can also be powered by the battery pack.

An example of the embodiment of the claimed invention.

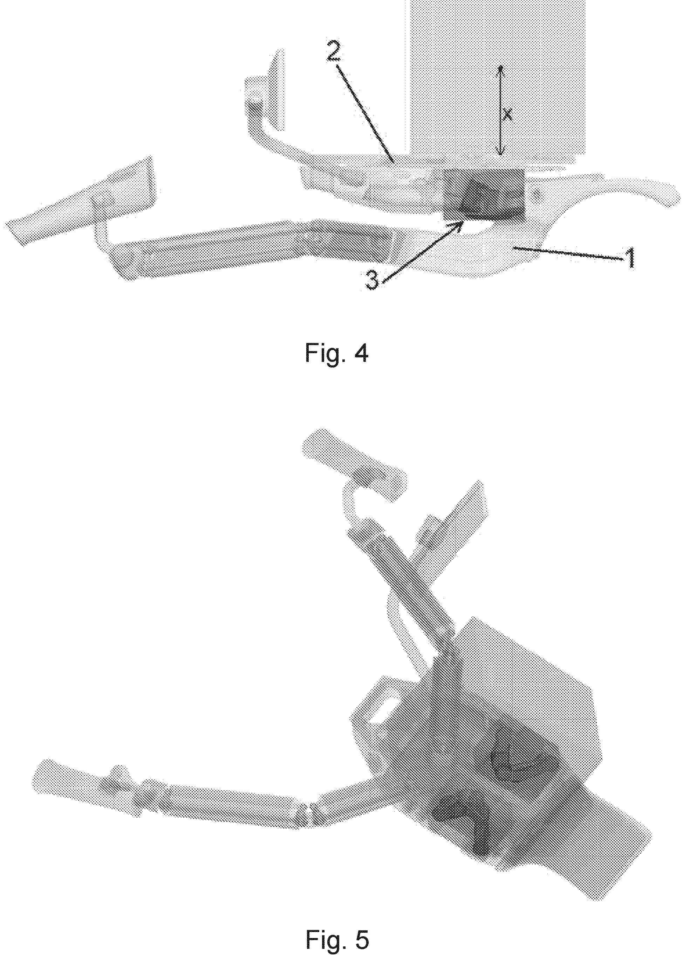

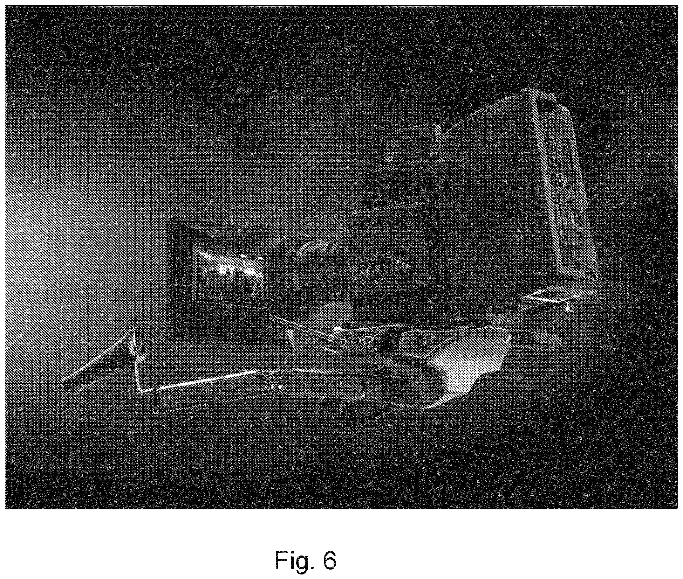

The stabilizer consists of a base and a movable platform connected by two hinge mechanisms (Figs. 4-6).

A stabilized object (e.g. a movie camera) is mounted on the platform, whose "body" (i.e. not including e.g. battery pack, interchangeable lens, etc.) is enclosed in a virtual dimensional cube. The side of the cube in this example is 150 mm.

The distance from the upper horizontal plane of the platform to the intersection point of the axes of the hinge mechanism is 75 mm.

Each hinge mechanism enclosed in a virtual dimensional parallelepiped has a volume corresponding to its dimensions - the parallelepiped is 70 mm long, 53 mm wide and 44 mm high.

The hinge mechanism made according to the following ratio:

$$\frac{\sum\limits_{i=n}^{i=1} V_i}{8x^3} = K$$

In the example suggested, **the coefficient K is 0.097.**

The range of rotation of the platform relative to the base is 20, 10 and 10 degrees around the horizontal, vertical and longitudinal axes respectively.

A number of different cameras can be fitted to this stabilizer, the height of the centre of gravity of such a camera must not exceed the value X. The camera is mounted so that its centre of gravity is as close as geometrically possible to the intersection of the axes of the hinge mechanisms.

As previously stated, the design of the hinge mechanism consists of at least two links, connected both to each other and to the base and platform, by at least three axes allowing rotation. The bearing part of the hinge mechanism is the part that connects the two axes and provides rigidity between them.

The addition of any elements or changes in the shape of existing elements, which do not increase the carrying capacity of the mechanism and are necessary only to increase its volume, should not be taken into account in the calculation of the above volumes. That is, when the volume of the parallelepiped **ai x bi x ci,** in which the hinges are enclosed, is calculated, only that part of the hinge, which actually carries the load, is enclosed inside the parallelepiped.

The claimed invention provides stabilization of video equipment while it is being moved, but is much smaller and lighter than known comparable solutions.

**Claims**

1. A video equipment stabilization device, **characterized by** that it comprises a base and a movable platform interconnected with at least one hinge mechanism, made according to the following ratio:

$$\frac{\sum_{i=n}^{i=1} V_i}{8x^3} = K$$

where x is a distance from an upper horizontal plane of the platform to an intersection point of axes of the hinge mechanism;

K≤0,5;
$V_i = a_i \times b_i \times c_i$;
$a_i$ - length of the dimensional parallelepiped;
$b_i$ - height of the dimensional parallelepiped;
$c_i$ - width of the dimensional parallelepiped;
n - total number of hinge mechanisms.

2. The video equipment stabilization device according to claim 1, **characterized in that** the hinge mechanism has at least two links connected both to each other and to the base and platform by at least three cylindrical hinges, each of which is designed to rotate around its axis.

3. The video equipment stabilization device according to claim 2, **characterized in that** the first link is connected at its first end to the base of the device and its second end is connected to the first end of the second link, with the second end of the second link connected to the platform of the device.

4. The video equipment stabilization device according to claim 1, **characterized in that** the axes of the hinge mechanisms are not orthogonal to each other.

5. The video equipment stabilization device according to claim 1, **characterized in that** it comprises more than one hinge mechanism, and the axes of all hinge mechanisms intersect at one point.

6. The video equipment stabilization device according to claim 1, **characterized in that** it additionally comprises at least one brushless motor mounted directly on an axle or designed to control the hinges via at least one lever, belt or chain gear.

7. The video equipment stabilization device according to claim 1, **characterized in that** it additionally comprises adjustable handles and changeable shoulder rests attached to the base of the device.

8. The video equipment stabilization device according to claim 1, **characterized in that** it additionally comprises a monitor and/or a viewfinder that is attached to the base and/or to the movable platform or carried on the camera or the cameraman's body.

9. The video equipment stabilization device according to claim 1, **characterized in that** it additionally comprises an internal or external battery pack designed to power the device and the stabilized camera.

Fig. 1

Fig. 2

Fig. 3

Fig. 4

Fig. 5

Fig. 6

## INTERNATIONAL SEARCH REPORT

| | International application No. |
|---|---|
| | PCT/RU 2021/050039 |

**A.   CLASSIFICATION OF SUBJECT MATTER**

F16M 11/12 (2006.01); F16M 11/18 (2006.01); F16M 13/04 (2006.01)

According to International Patent Classification (IPC) or to both national classification and IPC

**B.   FIELDS SEARCHED**

Minimum documentation searched (classification system followed by classification symbols)

F16M 11/00, 11/02, 11/04, 11/06, 11/08, 11/10, 11/12, 11/18, 13/00, 13/04

Documentation searched other than minimum documentation to the extent that such documents are included in the fields searched

Electronic data base consulted during the international search (name of data base and, where practicable, search terms used)

PatSearch (RUPTO Internal), USPTO, PAJ, Espacenet, Information Retrieval System of FIPS

**C.   DOCUMENTS CONSIDERED TO BE RELEVANT**

| Category* | Citation of document, with indication, where appropriate, of the relevant passages | Relevant to claim No. |
|---|---|---|
| D, A | WO 2019/134151 A1 (SZ DJI TECHNOLOGY CO., LTD.) 11.07.2019, the abstract, figure 1 | 1-9 |
| A | WO 2018/157591 A1 (SHENZHEN YUEJIANG TECHNOLOGY CO. LTD) 07.09.2018, the abstract, figure 1 | 1-9 |
| A | CN 205424318 U (GUILIN FEIYU ELECTRONIC TECHNOLOGY SO., LTD.) 03.08.2016, the abstract, figure 1 | 1-9 |
| A | WO 2020/011278 A1 (GUILIN ZHISHEN INFORMATION TECHNOLOGY CO., LTD.) 16.01.2020, the abstract, figure 1 | 1-9 |
| A | TW M276939 U (CHEN MING-TSUEN) 01.10.2005, figures 2-8 | 1-9 |

☐  Further documents are listed in the continuation of Box C.  ☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 23 April 2021 (23.04.2021) | 27 May 2021 (27.05.2021) |

| Name and mailing address of the ISA/ RU | Authorized officer |
|---|---|
| Facsimile No. | Telephone No. |

Form PCT/ISA/210 (second sheet) (July 1998)

**EP 4 116 618 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018335178 A1
- WO 2019134151 A1